# EUROPÄISCHE PATENTSCHRIFT

(11) **EP 0 838 375 B1**
(45) Veröffentlichungstag und Bekanntmachung des Hinweises auf die Patenterteilung: **10.04.2002**
(21) Anmeldenummer: 97117460.2
(22) Anmeldetag: 09.10.1997
(51) Int. Cl.: B60R 21/06

(54) **Sicherheitsnetzanordnung**
Safety net arrangement
Agencement de filet de sécurité

(30) Priorität: 23.10.1996 DE 19643691
(43) Veröffentlichungstag der Anmeldung: 29.04.1998
(73) Patentinhaber: BOS GmbH & Co. KG, 73760 Ostfildern (DE)
(72) Erfinder: Ament, Eduard, 73773 Aichwald (DE); Seel, Holger, 71134 Aidlingen (DE)
(74) Vertreter: Patentanwälte Rüger, Barthelt & Abel

(56) Entgegenhaltungen:
- EP-A- 0 649 778
- DE-A- 2 749 560
- DE-A- 3 418 378
- GB-A- 2 021 932
- US-A- 4 150 799

## Beschreibung

Aus der Praxis sind Sicherheitsnetze bekannt, die den Fahrgastraum von dem Lade- oder Kofferraum eines Kombi-PKW mechanisch abtrennen sollen. Hierdurch sollen Gegenstände, die sich im Lade- oder Kofferraum des PKW befinden, daran gehindert werden, bei einem Auffahrunfall in den Fahrgastraum geschleudert zu werden. Das Sicherheitsnetz hat die Aufgabe, die Gegenstände zurückhalten, um eine Gefährdung der Fahrgäste auszuschließen. Dabei darf das Sicherheitsnetz keineswegs bei solchen Verzögerungen versagen, für die die Knautschzone eines Fahrzeugs ausgelegt ist. Es ist schließlich unbefriedigend, wenn beispielsweise der Fahrer von den Rückaltesystemen und der Knautschzone gegen lebensgefährliche Verletzungen geschützt ist, andererseits aber tödliche Kopfverletzungen beigebracht bekommt von einem Gegenstand, der bei dem Auffahrunfall aus dem Laderaum gegen den Kopf des Fahrers geschleudert wird.

Da bei den heute üblichen Kraftfahrzeugen zumindest die Rücksitze im Sinne eines Vergrößerns des Laderaums umlegbar sind, wird das Sicherheitsnetz nicht nur bei aufgerichteter Rücksitzlehne, sondern zumindest auch bei nach vorne umgeklappter Rücksitzlehne benötigt. In dem einen Fall befindet sich die Unterkante des Sicherheitsnetzes auf der Höhe der Oberkante der aufgerichteten Sitzlehne und im anderen Fall in der Nähe des Bodens z.B. im Fußraum vor den Hintersitzen. In beiden Fällen ist der Abstand zwischen der unteren Befestigungsstelle des Sicherheitsnetzes und dem Dachhimmel unterschiedlich. Für die beiden Anwendungsfälle unterschiedliche Sicherheitsnetze vorzusehen, ist unbefriedigend. Es wurde deswegen in der Vergangenheit bereits versucht, das Sicherheitsnetz, ähnlich einem Rollo, auf einer Wickelwelle aufzuwickeln und lediglich den Teil auszufahren, der zur Abtrennung des Laderaums gegenüber dem Fahrgastraum benötigt wird.

Bei aufgerichteter Rücksitzlehne befindet sich eine verhältnismäßig große Menge nicht abgewickelten Sicherheitsnetzes auf der Wickelwelle und könnte durch einen in das Sicherheitsnetz geschleuderten Gegenstand von der Wickelwelle abgezogen werden. Der sich dadurch bildende Ballon würde ein tiefes Eindringen des Gegenstands in den Fahrgastraum nicht verhindern. Außerdem bestünde die Gefahr des Versagens des Sicherheitsnetzes, weil der Gegenstand von dem Sicherheitsnetz erst zu einem Zeitpunkt angehalten werden kann, nachdem die Verformung der Knautschzone und damit die Verzögerung der Karosserie weitgehend abgeschlossen ist.

Um diese Ballonbildung bei nicht vollständig abgezogenem Sicherheitsnetz zu vermeiden, wurde am Auslaufschlitz des Gehäuses, in dem die Wickelwelle drehbar gelagert ist, eine Art Kamm vorgesehen. Dieser Kamm springt gegenüber derjenigen Ebene, in der das Sicherheitsnetz beim Ausziehen aus dem Gehäuse normalerweise bewegt wird, zurück, um das Ausziehen des Sicherheitsnetzes möglichst wenig zu behindern. Der in das Sicherheitsnetz fliegende Gegenstand soll das Sicherheitsnetz sodann gegen diesen Kamm drücken, damit sich die Kammzinken in den Maschen des Sicherheitsnetzes verhaken.

Diese Anordnung hat zwei wesentliche Nachteile:

Beim Ausziehen des Sicherheitsnetzes läßt sich keineswegs immer sicherstellen, daß sich nicht doch das Sicherheitsnetz in den Kammzinken verhängt. Abgesehen von der dadurch entstehenden Behinderung bei der Handhabung tritt beim Verhaken auch jedesmal eine kleine Teilschädigung auf, die das Sicherheitsnetz vorzeitig altern läßt. Der andere wesentliche Nachteil besteht in einer Beeinträchtigung des Sicherheitsnetzes. Es läßt sich nicht vermeiden, daß die Kammzinken bei einem Auffahrunfall möglicherweise die Fäden des Sicherheitsnetzes durchschneiden oder durchreißen lassen, was die Gefahr des Versagens des Sicherheitsnetzes in sich birgt.

Aus der DE 27 49 560 A ist ein Sicherheitsnetz oder Trenngitter bekannt, das eine drehbar gelagerte Wickelwelle aufweist, die mit Hilfe eines Federmotors in Aufwickelrichtung vorgespannt ist. An der Wickelwelle ist das eigentliche Sicherheitsnetz befestigt, dessen andere Kante mit einer Zugstange versehen ist, die unterhalb des Dachhimmels im Fahrzeug zu verankern ist.

Mit der Wickelwelle ist ein Sperrrad drehfest verbunden, das mit einer Sperrklinke in Gestalt eines Federhebels zusammenwirkt, der als Blattfeder ausgebildet ist und in die Ausnehmungen des Sperrrads eingreift.

Gemäß Beschreibung muss zum Einfahren des Sicherheitsnetzes der Hebel von Hand in eine Freigabe- oder Lösestellung überführt werden, in der sich das Sperrrad ungehindert drehen läßt. Entsprechend einer Weiterbildung kann der Federhebel in der Außereingriffsstellung verrastet werden, um ein Einfahren des Sicherheitsnetzes zu ermöglichen. Bei erneuten Ausfahren wird die Haltestellung des Federhebels wieder aufgehoben und der Hebel ist in der Lage das Einfahren zu blockieren.

Ausgehend hiervon ist es Aufgabe der Erfindung, eine Sicherheitsnetzanordnung zu schaffen, die ein unterschiedlich weites Ausfahren des Sicherheitsnetzes gestattet und die im Gefahrenfall eine gegen Null gehende Ansprechzeit aufweist.

Diese Aufgabe wird erfindungsgemäß durch die Sicherheitsnetzanordnung mit den Merkmalen des Anspruches 1 gelöst.

Bei der neuen Anordnung ist in dem Gehäuse eine Wickelwelle frei drehbar gelagert. Das Sicherheitsnetz führt von der Wickelwelle durch einen Auslaufschlitz nach außen, dessen Kanten vollkommen glatt und ohne Verzahnung ausgebildet sind. Das Sicherheitsnetz kann dadurch ohne Beschädigung an den Kanten des Auslaufschlitzes vorbeigezogen werden, um es in den karosserieseitigen Verankerungen einzuhängen. Das Blockieren eines weiteren Abziehens des Sicherheitsnetzes bei einem Unfall geschieht mit Hilfe einer Sperreinrichtung, die eine Rotation der Wickelwelle verhindert.

Infolge der Sperreinrichtung kann auch das Sicherheitsnetz für den Anwendungsfall mit Vollauszug so lang gestaltet sein, daß es bei vollständigem Auszug noch um ein oder zwei Gänge um die Wickelwelle herumliegt, um die Verankerung des Sicherheitsnetzes in der Wickelwelle zu schützen.

Eine in der Wickelwelle angeordnete Federmotoreinrichtung hält in jeder Lage das Sicherheitsnetz straff, da sie die Wickelwelle im Sinne eines Aufwickelns des Sicherheitsnetzes vorspannt. Das Straffhalten des Sicherheitsnetzes verkürzt die Ansprechzeit im Gefahrenfall wesentlich.

Die Sperreinrichtung der neuen Sicherheitsnetzanordnung weist zwei Betriebszustände auf. In einem der beiden Betriebszustände ist die Wickelwelle im wesentlichen frei drehbar, und zwar in beiden Drehrichtungen der Wickelwelle, während in dem anderen Zustand eine Rotation der Wickelwelle zumindest im Abwickelsinne blockiert ist.

Die Sperreinrichtung kann dazu im einfachsten Falle ein Ein-Richtungs-Gesperre sein, das wie eine Art Freilauf wirkt, damit unabhängig von irgendwelchen Manipulationen beim Herausnehmen des Sicherheitsnetzes ein Aufwickeln auf der Wickelwelle möglich ist. Durch manuelle Betätigung kann das Ein-Richtungs-Gesperre unwirksam gemacht werden. In diesem Zustand kann das Sicherheitsnetz ohne Behinderung zum Zwecke des Einhängens in der Karosserie aus dem Gehäuse herausgezogen werden.

Um die Handhabung des Sicherheitsnetzes zu vereinfachen, ist zweckmäßigerweise der Sperreinrichtung eine Steuereinrichtung zugeordnet, durch die die Sperreinrichtung zwischen den beiden Zuständen hin- und herschaltbar ist. Diese Steuereinrichtung kann manuell betätigt sein, sie kann abhängig von der Fahrzeugbeschleunigung bzw.
-verzögerung arbeiten oder sie kann durch eine übermäßige Beschleunigung der Wickelwelle in Gang gesetzt werden, die auftritt, wenn ein Gegenstand in das Sicherheitsnetz geschleudert wird. Schließlich ist es denkbar, die Steuereinrichtung durch eine Querkraft, die auf die Wickelwelle einwirkt, zu aktivieren.

Um die Sicherheit der Gesamtanordnung zu erhöhen, sind wenigstens zwei Sperreinrichtungen vorgesehen. Diese Sperreinrichtungen sind an je einem Ende der Wickelwelle vorgesehen. Diese dort vorhandenen Sperreinrichtungen können nach demselben oder unterschiedlichen Wirkprinzipien arbeiten. Es ist sogar im Sinne einer Verbesserung der Sicherheit denkbar, drei Sperreinrichtungen einzusetzen, wobei zwei Sperreinrichtungen an einem Ende der Wickelwelle angeordnet sind und nach unterschiedlichen Prinzipien arbeiten, während am anderen Ende die dritte Sperreinrichtung sitzt, die wiederum von einer anderen Bauart ist.

Denkbar ist beispielsweise eine manuell freigegebene Steuereinrichtung, die durch eine Fahrzeugbeschleunigung entriegelt wird und die Sperreinrichtung in den Sperrzustand überführt. Solche zwei gleichartigen Sperreinrichtungen können an beiden Enden der Wickelwelle untergebracht sein. Es ist ferner möglich, nur eine solche Sperreinrichtung zu verwenden, während an der anderen Seite der Wickelwelle eine Sperreinrichtung sitzt, die dadurch aktiviert wird, daß ein in das Sicherheitsnetz geschleuderter Gegenstand an der Wickelwelle eine Querkraft hervorruft, wodurch die Wickelwelle aus ihrer Lagerposition, in der sie frei drehbar ist, herausgehoben wird in eine Position, in der die Rotation blockiert ist. Weiter ist es möglich, an Stelle der manuellen Betätigung eine voll automatische Betätigung vorzusehen. In diesem Falle ist das Sicherheitsnetz vollkommen frei beweglich und die Rotation der Wickelwelle wird erst blockiert, wenn eine übermäßige Verzögerung des Fahrzeugs auftritt bzw. die Wickelwelle übermäßig beschleunigt wird. Dieses System kann mit einem gleichartigen System am anderen Ende der Wickelwelle kombiniert werden oder mit einem System, das dadurch wirkt, daß das Ende der Wickelwelle radial verlagert wird.

Die Sperreinrichtung weist vorzugsweise ein mit der Wickelwelle im wesentlichen drehfest verbundenes Sperrglied auf, das mit einem Verriegelungsglied in dem Gehäuse zusammenwirkt. Je nach Ausführungsform der Sperreinrichtung ist das Sperrglied ein drehfest mit der Wickelwelle verbundenes Sperrad, das über den gesamten Umfang eine Sperrverzahnung trägt. Das Sperrglied kann aber auch eine Scheibe sein, die lediglich ein oder zwei Zähne trägt und die gegenüber der Wickelwelle radial beweglich ist.

Als Verriegelungsglieder kommen in Frage Sperrklinken, Sperrschieber oder drehfest in dem Gehäuse sitzende Hohlzahnräder, die entweder voll mit Sperrzähnen bestückt sind oder nur wenige Sperrzähne tragen.

Die Steuereinrichtung umfaßt eine in einer Mulde gelagerte Kugel, die durch die Beschleunigung aus der Mulde ausgelenkt wird und eine entsprechende Betätigung hervorruft. Die Steuereinrichtung kann aber auch ein Trägheitssystem sein, das mit der Wickelwelle verbunden ist. Schließlich kann die Steuereinrichtung auch durch eine Rasteinrichtung oder verformbare Mittel gebildet sein, die wirksam werden, wenn Querkräfte auf die Wickelwelle einwirken und die Wickelwelle in der zugehörigen Lagereinrichtung radial verschieben.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 eine Sicherheitsnetzanordnung gemäß der Erfindung, wie sie an der Rückseite einer Rücksitzlehne befestigt ist, mit teilweise ausgezogenem Sicherheitsnetz, in einer perspektivischen Darstellung,
Fig. 2 die Sicherheitsnetzanordnung nach Fig. 1, mit teilweise aufgebrochenem Gehäuse, in einer Seitenansicht,
Fig. 3 die Sperreinrichtung an der rechten Seite der Wickelwelle der Sicherheitsnetzanordnung nach Fig. 2, in einer Draufsicht bei geöffnetem Gehäuse,
Fig. 4 die Sperreinrichtung nach Fig. 3, in einer anderen Betriebsstellung,
Fig. 5 die Sperreinrichtung an der linken Seite der Wickelwelle der Sicherheitsnetzanordnung nach Fig. 2, in einer Stirnansicht bei geöffnetem Gehäuse, und
Fig. 6 die Sperreinrichtung nach Fig. 5, in einer anderen Funktionsstellung.

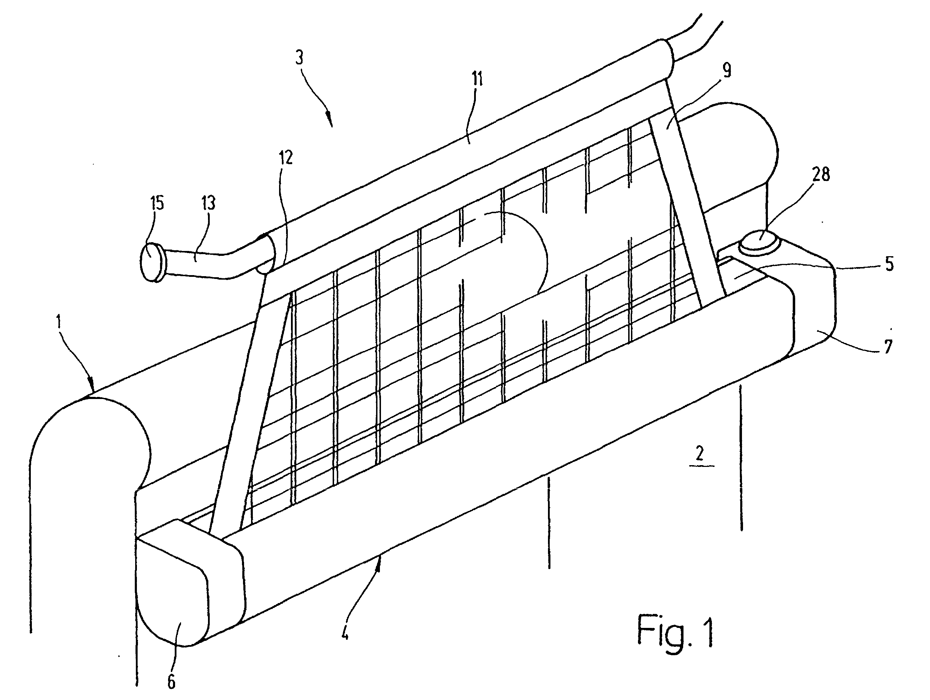

Fig. 1 veranschaulicht von einem nicht weiter gezeigten Kombi-PKW dessen Rücklehne 1, an deren Rückseite 2 in der Nähe der Oberkante der Rücklehne 1 eine Sicherheitsnetzanordnung 3 lösbar verankert ist. Die Darstellung entspricht hierbei einem Blickwinkel aus der Sicht der geöffenten Laderaumklappe des betreffenden Kombi-PKW.

Zu der Sicherheitsnetzanordnung 3 gehört ein längliches Gehäuse 4, das sich über die Breite der Rücksitzlehne 1 erstreckt und an seiner Oberseite mit einem glattrandigen Auslaufschlitz 5 versehen ist. Der Auslaufschlitz 5 erstreckt sich von einer Endkappe 6 bis zu der gegenüberliegenden anderen Endkappe 7 des Gehäuses 4.

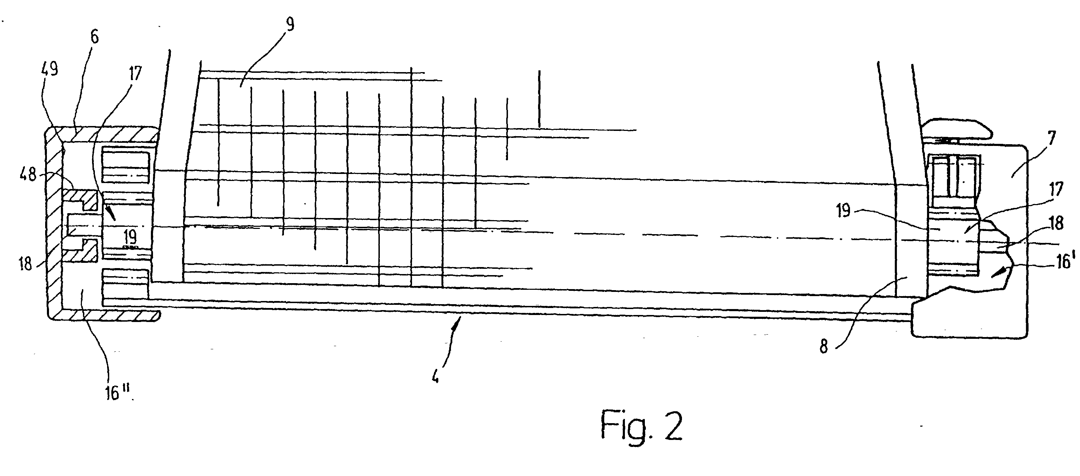

Wie aus Fig 2 ersichtlich ist, dient das Gehäuse 4 der Lagerung einer Wickelwelle 8, an der mit einer Kante ein Sicherheitsnetz 9 befestigt ist, das durch den Schlitz 5 aus dem Gehäuse 4 herausziehbar ist. Eine zu der Wickelwelle 8 parallele Kante 11 des Sicherheitsnetzes 9 ist zu einer Schlaufe 12 geformt, durch die eine Auszugsstange 13 hindurchführt, die an beiden Enden mit pilzartigen Köpfen 15 versehen ist, die in entsprechende Aufnahmetaschen unter dem Dach des betreffenden PKW einzuhängen sind.

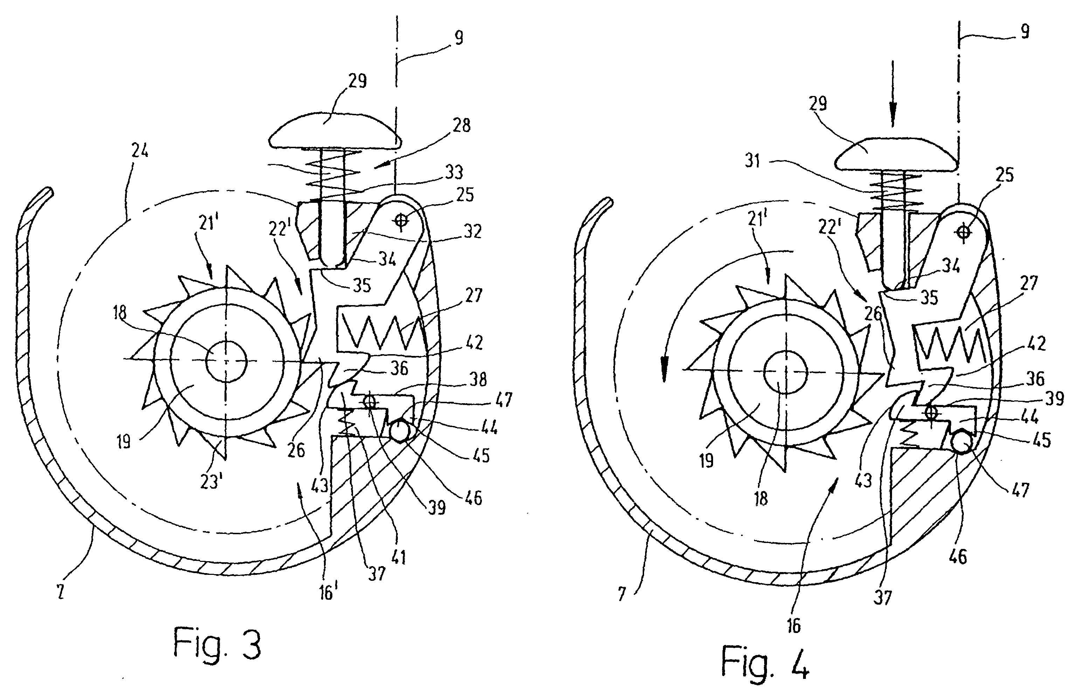

In dem Gehäuse 4 sind für das rechte und das linke Ende der Wickelwelle 8 Sperreinrichtungen 16 angeordnet, deren Aufbau und Wirkungsweise anhand der Prinzipdarstellungen in den Fig. 3 und 4 bzw 5 und 6 erläutert ist.

Die Wickelwelle 8 geht an ihrem rechten Ende in einen Wellen zapfen 17 über, der aus einem dünneren Abschnitt 18 und einem dickeren Abschnitt 19 besteht. Der dünnere Wellenzapfenabschnitt 18 steckt in einem nicht weiter gezeigten, in der Endkappe 7 befindlichen Gleitlager. Mit dem Abschnitt 19 mit größerem Durchmesser wirkt die Sperreinrichtung 16' zusammen, die aus einem mit der Wickelwelle 8 drehfest verbundenen Sperrglied 21' und einem damit zusammenwirkenden Verriegelungsglied 22' besteht, das in der Endkappe 7 schwenkbar gelagert ist.

Das Sperrglied 21' hat die Gestalt eines Sperrzahnrads, das drehfest auf dem Abschnitt 19 sitzt und mit einer Vielzahl von sägezahnförmigen Sperrzähnen 23' versehen ist. Die Sperrzähne 23' zeigen gegen dem Uhrzeigersinn und damit in Abwickelrichtung des Sicherheitsnetzes 9, dessen auf der Wickelwelle 8 aufgewickelter Ballen 24 strichpunktiert veranschaulicht ist.

Das Verriegelungsglied ist eine Verriegelungsklinke 22', die bei 25 achsparallel zu der Wickelwelle 8 schwenkbar gelagert ist. Sie trägt an ihrem von der Schwenkachse 25 abliegenden Ende eine Klinkennase 26, die zum Zusammenwirken mit den Verriegelungszähnen 23' gestaltet ist. Mit Hilfe einer als Schraubenfeder gestalteten Druckfeder 27 ist die Verriegelungsklinke 22' in die Eingriffsstellung mit dem Sperrad 21' vorgespannt.

Um die Verriegelungsklinke 22' außer Eingriff mit dem Sperrad 21' zu bringen, ist ein Betätigungsknopf 28 vorgesehen, der einen Betätigungskopf 29 und einen daran sitzenden zylindrischen Schaft 31 aufweist. Mit dem Schaft 31 ist der Betätigungsknopf 28 in einer zylindrischen Bohrung 32 neben der Schwenkachse 25 geführt. Eine auf dem Schaft 31 sitzende Schraubenfeder 33 stützt sich an der Außenseite der Kappe 7 ab und liegt anderenends an der Unterseite des Kopfes 29 an, um den Betätigungsknopf 28 nach oben in Richtung von der Verriegelungsklinke 22' weg vorzuspannen.

Der Betätigungsknopf 28 steht mit seinem von dem Kopf 29 abliegenden Ende 34 des Schaftes 31 auf einer Stufe oder Schulter 35 auf, die an der Verriegelungsklinke 22' im Bereich zwischen der Schwenkachse 25 und der Verriegelungsnase 26 ausgebildet ist.

An dem von der Schwenkachse 25 abliegenden Ende ist die Verriegelungsklinke 22' mit einem Haken 36 versehen, der dazu eingerichtet ist, mit einem Haken 37 eines zweiarmigen Steuerhebels 38 zusammenzuwirken. Der Haken 36 öffnet sich in die entgegengesetzte Richtung wie der Haken 37.

Der zweiarmige Steuerhebel 38 ist bei 39 achsparallel zu der Wickelwelle 8 in der Kappe 7 schwenkbar gelagert und wird mit Hilfe einer Druckfeder 41, die sich unterhalb des Hakens 37 befindet, in die Eingriffsstellung mit dem Haken 36 vorgespannt. Die genaue Lage der beiden Haken 36 und 37 ergibt sich aus der nachfolgenden Funktionsbeschreibung.

Im Ruhezustand liegen die beiden Haken 36 und 37 über Schrägflächen 42 und 43 aneinander an; sie sind nicht ineinander verhakt.

Der Steuerhebel 38 ist an seinem von dem Haken 37 abliegenden Ende mit einem nach unten zeigenden Fortsatz 44 versehen, der eine Mulde 45 enthält, die sich nach unten öffnet. Mit der Mulde 45 korrespondiert eine Mulde 46 in der Endkappe 7. Zwischen den beiden Mulden 45 und 46 ist eine als Steuerglied wirkende Kugel 47 gefesselt.

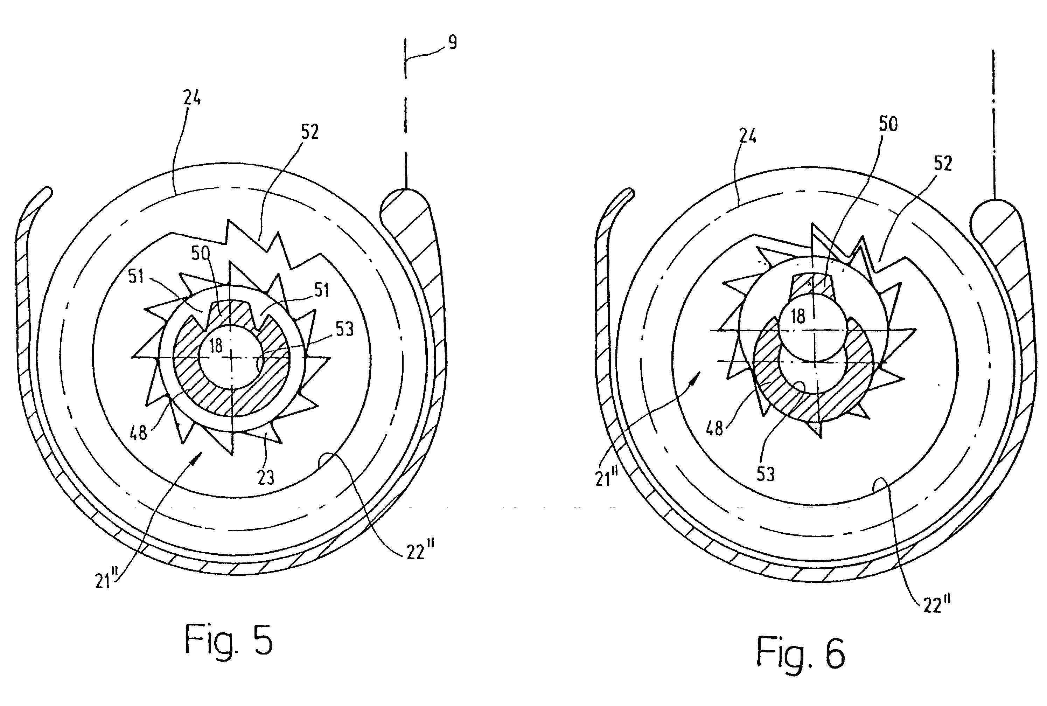

Die Sperreinrichtung 16" an der linken Seite der Wickelwelle 8 unterscheidet sich von der Sperreinrichtung 16' an der rechten Seite. Den Aufbau zeigt in einer Prinzipdarstellung Fig. 5. Dabei sind funktionell einander entsprechende Teile mit demselben Bezugszeichen ergänzt durch zwei Apostrophe bezeichnet.

Auch am linken Ende ist die Wickelwelle 8 mit einem Lagerzapfen 17" versehen, der sich aus dem dickeren Abschnitt 19" und dem dünnen Abschnitt 18" zusammensetzt. Auf dem dicken Abschnitt 19" sitzt das Sperrglied 21" wiederum in Gestalt eines Sperrzahnrades mit Sperrzähnen 23", die so ausgerichtet sind, daß sie sich der Abwickelrichtung entgegenstellen.

Zur Lagerung des Wellenzapfenabschnitts 18" dient eine Lagerbüchse 48, die an einer innenliegenden Stirnseite 49 der Endkappe 6 einstückig angeformt ist. Diese Lagerbüchse 48 zeigt in Richtung auf die benachbarte Wickelwelle 8.

Am Umfang der Lagerbüchse 48 ist, ein Abschnitt 50 durch zwei Sollbruchstellen 51 in Gestalt von zwei parallel mit Abstand zueinander verlaufenden Kerben abgegrenzt, deren Abstand etwa dem Durchmesser des Achszapfens 18 entspricht und die über die Länge der Lagerbüchse 48 durchgehen. Ihre genaue Lage ergibt sich aus der weiter unten gegebenen Funktionsbeschreibung.

Das Verriegelungsglied 22" der Sperreinrichtung 16" am linken Ende besteht in einem Hohlrad, das drehfest in dem Gehäuse 4 verankert und zu der Lagerbüchse 48 koaxial ist. Dieses Hohlrad 22" ist mit drei Sperrzähnen 52 versehen, die sich dem zwischen den beiden Kerben 51 begrenzten Abschnitt 50 der Lagerbüchse 48 etwa gegenüber befinden. Der Zahnkopfkreisdurchmesser des Sperrads 23" ist kleiner als der Zahnkopfkreisdurchmesser des Hohlrads 22", womit das Sperrad 23" bei unverletzter Lagerbüchse 48 frei drehbar ist.

Die Funktionsweise der insoweit beschriebenen Sicherheitsnetzanordnung 3 ist wie folgt:

Im Anlieferzustand, also vor der Montage im PKW, ist das Sicherheitsnetz 9 vollständig auf der Wickelwelle 8 aufgewickelt. Das Aufwickeln auf der Wickelwelie 8 geschieht mit Hilfe eines nicht weiter gezeigten und im Inneren der Wickelwelle 8 sich befindenden Federmotors, von dem ein Ende z.B. über den rechten Wellenzapfen 18 nach außen geführt und dort in der Endkappe 7 drehfest festgelegt ist. Im eingefahrenen Zustand des Sicherheitsnetzes 8 liegt die Zugstange 13 an den glatten Rändern des Auslaufschlitzes 5 an.

In diesem Zustand wird die Sicherheitsnetzanordnung 3 an der Rückseite 2 der Rücksitzlehne 1 verankert.

Im Anlieferzustand sind die Sollbruchstellen in Gestalt der beiden Kerben 51 unverletzt, in dem Sinne, daß die Lagerhülse 48 mit ihrer darin enthaltenen zylindrischen Bohrung ein Gleitlager für den betreffenden Wellenzapfen 18" bildet.

In diesem Zustand befinden sich die Sperrzähne 23" des Sperrades 21" im Abstand zu den Verriegelungszähnen 52. Der Durchmesser des Sperrades 21" ist so gewählt, daß der Flugkreisdurchmesser der Sperrzähne 23 kleiner ist als der Flugkreisdurchmesser der nach innen ragenden Spitzen der Verriegelungszähne 52.

Die Sperreinrichtung 16' auf der rechten Seite der Wickelwelle 8 mag sich in dem in Fig. 3 gezeigten Zustand befinden. In diesem Zustand greift die Verriegelungsklinke 22' in eine Zahnlücke zwischen Sperrzähnen 23' des zugehörigen Sperrades 21' ein. Hierdurch ist eine Rotation der Wickelwelle 8 im Sinne des Herausziehens des Sicherheitsnetzes 9 aus dem Gehäuse 4 blockiert. Um das Sicherheitsnetz 9 herausziehen zu können, drückt der Benutzer den Betätigungsknopf 28 nieder, wodurch die Verriegelungsklinke 22' entgegen der Wirkung der Druckfeder 27 im Gegenuhrzeigersinne um die Schwenkachse 25 ein Stück herumgeschwenkt wird. Bei dieser Schwenkbewegung drückt der Haken 36 den Haken 37 gegen die Wirkung der Druckfeder 41 nach unten zurück. Am Ende der Niederdrückbewegung des Betätigungsknopfes 28 befindet sich der Haken 36 an einer Stelle zwischen dem Haken 37 und der Schwenkachse 39. Im Verlauf dieser Bewegung gleitet die Spitze des Hakens 36 an der Spitze des Hakens 37 vorbei, so daß dieser unter der Wirkung der Feder 41 erneut nach oben schnappt. Wenn der Benutzer nun den Betätigungsknopf 28 los läßt, der durch die Feder 33 wieder in seine Ausgangslage zurückbewegt wird, bleibt dennoch die Verriegelungsklinke 22' außer Eingriff mit dem Sperrad 21'. In dieser Außereingriffsstellung wird die Verriegelungsklinke 22' durch das Zusammenwirken der beiden Haken 36 und 37 gehalten. Die Sperreinrichtung 16' befindet sich dadurch in ihrer Freilaufstellung, in der die Wickelwelle 8 in beiden Richtungen frei drehbar ist.

Der Benutzer kann nun ungehindert das Sicherheitsnetz 9 so weit aus dem Gehäuse 4 herausziehen, wie dies notwendig ist, damit die Zugstange 13 in den karosserieseitigen Verankerungen eingehängt werden kann.

In der Verriegelungsstellung zwischen den beiden Haken 36 und 37 ist außerdem die Steuerkugel 47 zwischen den beiden Mulden 45 und 46 gefesselt.

Sobald nach dem Einhängen des Sicherheitsnetzes 9 das Fahrzeug hinreichend stark angefahren oder gebremst wird, vollführt die Steuerkugel 47 zwischen den beiden Mulden 45 und 46 eine Ausgleichsbewegung infolge ihrer Trägheit. Diese Ausgleichsbewegung führt zum Rand der beiden Mulden 45 und 46, die aufeinander zu konkav sind, wodurch der Steuerhebel 38 an seinem von dem Haken 37 abliegenden Ende angehoben wird. Das Anheben führt dazu, daß der Haken 37 nach unten gegen die Wirkung der Feder 41 bewegt wird und aus dem Bewegungsbereich des Hakens 36 herauskommt. Zufolge der Wirkung der Druckfeder 27 kann nun die Verriegelungsklinke 22' wieder in die Eingriffsstellung mit dem Sperrzahnrad 21' herumschwenken, so daß die Verriegelungsnase 21 in die Lücke zwischen benachbarten Sperrzähnen 23' eingreifen kann.

Falls das Sicherheitsnetz 9 wieder eingefahren werden soll, genügt es, den Zugstab 13 aus den Verankerungen auszuhängen und das Sicherheitsnetz 9 unter der Wirkung des Federmotors in das Gehäuse 4 einfahren zu lassen. Wegen der sägezahnförmigen Gestalt der Sperrzähne 23' und der Verriegelungsnase 26 wird die Drehung der Wickelwelle 8 im Sinne des Einfahrens des Sicherheitsnetzes 9 nicht gesperrt. Das Sperrzahnrad 21' und die Verriegelungsklinke 22' wirken wie ein Ein-Richtungs-Gesperre oder Ratschenfreilauf.

Zum erneuten Ausfahren des Sicherheitsnetzes 9 ist dagegen wiederum der Betätigungsknopf 28 niederzudrücken, wie dies bereits beschrieben ist.

Sollte bei ausgefahrenem Sicherheitsnetz 9 ein Auffahrunfall geschehen und aus dem Laderaum ein Gegenstand in das aufgespannte Sicherheitsnetz 9 fliegen, kann dennoch das Sicherheitsnetz 9 nicht weiter von der Wickelwelle 8 abgewickelt werden. Die Sperreinrichtung 16' verhindert durch den Eingriff zwischen dem Sperrad 21' und der Verriegelungsnase 26 eine solche Rotation am rechten Ende der Wickelwelle 8.

Da sich die Wickelwelle 8 nicht mehr drehen kann, ruft der gegen das Sicherheitsnetz 9 drängende Gegenstand an der Wickelwelle 8 eine erhebliche Querkraft hervor. Die Querkraft führt dazu, daß an der linken Seite der Wickelwelle 8 die Lagerbüchse 48 an den beiden Kerben 51 aufbricht und den dazwischen befindlichen Teil 50 der Lagerbüchse 48 nach oben wegdrückt. Der Wellenzapfen 18" rutscht nach oben aus der jetzt nach oben offenen Lagerbüchse 48 heraus, wodurch die Sperrzähne 23" dieses dort befindlichen Sperrades 21" mit den Verriegelungszähnen 52 in Eingriff kommen können. Hierdurch ist nun auch das andere Ende der Wickelwelle 8 gegen eine Rotation gesichert, denn der Wellenzapfen 18" ist zwischen den verbleibenden Flanken der beiden Kerben 51 gefesselt und das Sperrad 21" steht mit dem Hohlrad 22" und dessen Verriegelungszähnen 52 in Eingriff.

Dadurch ist die Wickelwelle 8 an ihren beiden Enden gegen Rotation blockiert und kann sicher den gegen das Sicherheitsnetz 9 drückenden Gegenstand zurückhalten.

Falls der Laderaum zu seiner Gänze benötigt wird, wird die Sicherheitsnetzanordnung 3, nicht wie gezeigt, an der Rücksitzlehne 1 befestigt, sondern z.B. im Fußraum vor der Rücksitzbank. Diese Montage erfordert wegen des größeren Abstands eine sehr viel größere Länge an Sicherheitsnetz, die aber auf der Wickelwelle 8 zur Verfügung steht. Die Handhabung der Sicherheitsnetzanordnung 3 ist dabei prinzipiell die gleiche, ebenso wie die Blockierung beim Auffahrunfall.

Wie aus der gegebenen Funktionsbeschreibung ersichtlich ist, wirkt auf der rechten Seite der Betätigungsknopf 28 zusammen mit dem Steuerhebel 38 als manuelle/beschleunigungsabhängige Steuereinrichtung, um die Sperreinrichtung 16' in der Freilaufstellung zu halten. Die Sperreinrichtung 16" auf der linken Seite dagegen wird querkraftgesteuert, wobei die Steuereinrichtung die beiden Sollbruchkerben 51 sind, die beim Überschreiten einer vorgegebenen Querkraft die Lagerbüchse 48 aufbrechen lassen, so daß das Sperrglied 21" mit dem Verriegelungsglied 22" in Eingriff kommen kann.

Ein weiterer Unterschied zwischen den beiden Ausführungsformen von Sperreinrichtungen besteht darin, daß die Sperreinrichtung 16 auf der rechten Seite sich in ihrer Ruhestellung in der Sperrstellung befindet, in der ein Drehen der Wickelwelle 8 im Abwickelsinne blockiert ist. Die Sperreinrichtung 16 auf der linken Seite dagegen hat eine Ruhestellung, die mit der Freilaufstellung korrespondiert. Erst bei einem Unfall wird die Sperreinrichtung in die Sperrstellung überführt.

Anstatt auf der linken Seite die in den Fig. 5 und 6 gezeigte Sperreinrichtung 16" zu verwenden, kann auch dort die in den Fig. 3 und 4 gezeigte Sperreinrichtung 16' zum Einsatz kommen.

Eine Sicherheitsnetzanordnung weist eine in einem Gehäuse frei drehbare Wickelwelle auf, an der mit einer Kante ein Sicherheitsnetz befestigt ist. Das Sicherheitsnetz führt durch einen Auslaufschlitz aus dem Gehäuse nach außen, wobei die außenliegende Kante mit einem Zugstab verbunden ist.

Der Wickelwelle sind vorzugsweise an beiden Enden Sperreinrichtungen zugeordnet, die verhindern, daß Gegenstände, die bei einem Auffahrunfall in das Sicherheitsnetz geschleudert werden, das Sicherheitsnetz unter Ballonbildung von der Wickelwelle abwickeln können. Dabei können unterschiedliche Sperreinrichtungen an beiden Enden verwendet werden. Diese Sperreinrichtungen können je nach Anwendungsfall und Komfort bei der Bedienung bzw. den Herstellungskosten so gestaltet sein, daß sie in der Ruhestellung ein freies Laufen der Wickelwelle ermöglichen und erst bei einer starken Verzögerung des Fahrzeugs oder einer starken Winkelbeschleunigung der Wickelwelle aktiviert werden. Eine Sperreinrichtung, die als Ein-Richtungs-Gesperre wirkt, hat dagegen die kürzeste Ansprechzeit, da sie sich von Haus aus in der Sperrstellung befindet.

## Patentansprüche

1. Sicherheitsnetzanordnung (3) für Kraftfahrzeuge, insbesondere für Kombi-PKW, um bei einem Auffahrunfall Gegenstände aus einem Koffer- oder Gepäckraum daran zu hindern, in den Fahrgastraum geschleudert zu werden,
mit einem Gehäuse (4), das einen parallel zu der Länge des Gehäuses (4) sich erstreckenden Auslaufschlitz (5) aufweist,
mit einer in dem Gehäuse (4) drehbar gelagerten Wickelwelle (8),
mit einem Sicherheitsnetz (9), das zwei voneinander beabstandete Längskanten (11) aufweist, von denen eine an der Wickelwelle befestigt ist und die andere (11) mit einem Zugstab (13) verbunden ist, und das durch den Auslaufschlitz (5) verläuft,
mit einer der Wickelwelle (8) zugeordneten Wickeleinrichtung, um die Wickelwelle (8) im Sinne eines Aufwickelns des Sicherheitsnetzes (9) in Umdrehungen zu versetzen,
mit wenigstens einer einen Ruhezustand aufweisenden Sperreinrichtung (16), die zwischen dem Ruhezustand und einem weiteren Zustand umschaltbar ist, wobei sie in dem Ruhezustand eine Rotation der Wickelwelle (8) infolge der Wirkung eines in das Sicherheitsnetz (9) geschleuderten Gegenstands im Sinne des Abwickelns des Sicherheitsnetzes (9) sperrt, und in dem anderen Zustand die Wickelwelle (8) im wesentlichen frei drehbar ist, und
mit einer Steuereinrichtung (29,38,47;50,51;72,84), die der Sperreinrichtung (16) zugeordnet ist und durch die die Sperreinrichtung (16) aus dem einen Zustand in den Ruhezustand umschaltbar ist.

2. Sicherheitsnetzanordnung nach Anspruch 1, **dadurch gekennzeichnet, daß** zu der Wickeleinrichtung eine Federmotoreinrichtung gehört, durch die die Wickelwelle (8) in Sinne des Aufwickelns des Sicherheitsnetzes (9) vorgespannt ist.

3. Sicherheitsnetzanordnung nach Anspruch 1, **dadurch gekennzeichnet, daß** die Sperreinrichtung (16) ein Ein-Richtungs-Gesperre ist, das im Sperrzustand eine Drehung der Wickelwelle (8) im Sinne des Aufwickeins des Sicherheitsnetzes (9) nicht verhindert.

4. Sicherheitsnetzanordnung nach Anspruch 1, **dadurch gekennzeichnet, daß** die Steuereinrichtung (29,38,47) zur manuellen Betätigung eingerichtet ist.

5. Sicherheitsnetzanordnung nach Anspruch 1, **dadurch gekennzeichnet, daß** die Steuereinrichtung (29,38,47;72,84) derart gestaltet ist, daß sie in Abhängigkeit von der Beschleunigung des Fahrzeugs wirksam zu machen ist.

6. Sicherheitsnetzanordnung nach Anspruch 1, **dadurch gekennzeichnet, daß** sie wenigstens zwei unterschiedliche Sperreinrichtungen (16) aufweist.

7. Sicherheitsnetzanordnung nach Anspruch 1, **dadurch gekennzeichnet, daß** die Sperreinrichtung (16) wenigstens ein im wesentlichen drehfest mit der Wickelwelle (8) verbundenes Sperrglied (21,67) aufweist, das mit einem in dem Gehäuse (4) befindlichen Verriegelungsglied (22,62) zusammenwirkt.

8. Sicherheitsnetzanordnung nach Anspruch 7, **dadurch gekennzeichnet, daß** das Sperrglied ein drehfest mit der Wickelwelle (8) verbundenes Sperrad (21) aufweist, das eine Verzahnung trägt, die sich über den gesamten Umfang fortsetzt.

9. Sicherheitsnetzanordnung nach Anspruch 8, **dadurch gekennzeichnet, daß** die Verzahnung sägezahnförmig ist.

10. Sicherheitsnetzanordnung nach Anspruch 7, **dadurch gekennzeichnet, daß** das Verriegelungsglied von einer in dem Gehäuse (4) schwenkbar gelagerten Verriegelungsklinke (22) gebildet ist.

11. Sicherheitsnetzanordnung nach Anspruch 7, **dadurch gekennzeichnet, daß** das Verriegelungsglied von einem in dem Gehäuse (4) verschiebbar gelagerten Verriegelungsschieber gebildet ist.

12. Sicherheitsnetzanordnung nach Anspruch 7, **dadurch gekennzeichnet, daß** das Verriegelungsglied von wenigstens einem in dem Gehäuse (4) starr befestigten Verriegelungszahn (52,63) gebildet ist.

13. Sicherheitsnetzanordnung nach Anspruch 7, **dadurch gekennzeichnet, daß** das Verriegelungsglied von einem in dem Gehäuse (4) drehfest sitzenden Hohlrad (22,62) gebildet ist, das wenigstens einen Verriegelungszahn (52) oder eine Vielzahl äqudistant verteilter Verriegelungszähne (63) trägt.

14. Sicherheitsnetzanordnung nach Anspruch 1, **dadurch gekennzeichnet, daß** zu der Steuereinrichtung (29,38,47;72,84) eine in einer Mulde (45,46) gelagerte Kugel (47,84) gehört.

15. Sicherheitsnetzanordnung nach Anspruch 1, **dadurch gekennzeichnet, daß** zu der Steuereinrichtung (29,38,47) eine in dem Gehäuse (4) schwenkbar gelagerte Klinke (38) gehört.

## Claims

1. A safety net arrangement (3) for motor vehicles, in particular for estate cars, in order in the event of a collision to prevent articles from a boot or luggage space being flung into the passenger compartment, comprising
a housing (4) having an exit slot (5) which extends parallel to the length of the housing (4),
a winding shaft (8) mounted rotatably in the housing (4),
a safety net (9) having two mutually spaced longitudinal edges (11) of which one is fixed to the winding shaft and the other (11) is connected to a pull bar (13), the safety net passing through the exit slot (5),
a winding device associated with the winding shaft (8) for causing the winding shaft (8) to rotate in the direction of winding on the safety net (9),
at least one locking device (16) which has a rest condition and which can be switched over between the rest condition and a further condition, wherein in the rest condition it blocks rotary movement of the winding shaft (8) as a consequence of the effect of an article flung into the safety net (9), in the direction of unwinding of the safety net (9), and in the other condition the winding shaft (8) is substantially freely rotatable, and
a control device (29, 38, 47; 50, 51; 72, 84) whiclh is associated with the locking device (16) and by which the locking device (16) can be switched over from the one condition into the rest condition.

2. A safety net arrangement according to claim 1 **characterised in that** a spring motor device belongs to the winding device, by means of which spring motor device the winding shaft (8) is biased in the direction of winding on the safety net (9).

3. A safety net arrangement according to claim 1 **characterised in that** the locking device (16) is a monodirectional locking arrangement which in the locking condition does not prevent rotation of the winding shaft (8) in the direction of winding on the safety net (9).

4. A safety net arrangement according to claim 1 **characterised in that** the control device (29, 38, 47) is designed for manual actuation.

5. A safety net arrangement according to claim 1 **characterised in that** the control device (29, 38, 47; 72, 84) is designed in such a way that it is to be rendered operative in dependence on acceleration of the vehicle.

6. A safety net arrangement according to claim 1 **characterised in that** it has at least two different locking devices (16).

7. A safety net arrangement according to claim 1 **characterised in that** the locking device (16) has at least one locking member (21, 67) which is connected substantially non-rotatably to the winding shaft (8) and which co-operates with a lock member (22, 62) disposed in the housing (4).

8. A safety net arrangement according to claim 7 **characterised in that** the locking member has a locking wheel (21) which is connected non-rotatably to the winding shaft (8) and which carries a tooth arrangement which is extended over the entire periphery.

9. A safety net arrangement according to claim 8 **characterised in that** the tooth arrangement is of a sawtooth shape.

10. A safety net arrangement according to claim 7 **characterised in that** the lock member is formed by a lock pawl (22) mounted pivotably in the housing (4).

11. A safety net arrangement according to claim 7 **characterised in that** the lock member is formed by a lock slider mounted slidably in the housing (4).

12. A safety net arrangement according to claim 7 **characterised in that** the lock member is formed by at least one lock tooth (52, 63) which is rigidly fixed in the housing (4).

13. A safety net arrangement according to claim 7 **characterised in that** the lock member is formed by a hollow wheel (22, 62) which is carried non-rotatably in the housing (4) and which carries at least one lock tooth (52) or a plurality of equidistantly distributed lock teeth (63).

14. A safety net arrangement according to claim 1 **characterised in that** a ball (47, 84) supported in a trough (45, 46) belongs to the control device (29, 38, 47; 72, 84).

15. A safety net arrangement according to claim 1 **characterised in that** a pawl (38) mounted pivotably in the housing (4) belongs to the control device (29, 38, 47).

## Revendications

1. Agencement de filet de sécurité (3) pour véhicules automobiles, en particulier pour voitures particulières de type break, destiné à empêcher, lors d'un accident de la circulation, que des objets disposés dans un coffre à bagages soient projetés à l'intérieur de l'habitacle, comprenant
un boîtier (4), pourvu d'une fente de sortie (5) qui s'étend parallèlement à la direction longitudinale du boîtier(4),
un arbre d'enroulement (8) monté tournant à l'intérieur du boîtier (4),
un filet de sécurité (9), qui présente deux bords longitudinaux (11) éloignés l'un de l'autre, parmi lesquels l'un est fixé à l'arbre d'enroulement et l'autre (11) est lié à une barre de traction (13), et qui s'étend à travers la fente de sortie (5),
un dispositif d'enroulement associé à l'arbre d'enroulement (8), pour mettre ledit arbre d'enroulement en rotation dans le sens de l'enroulement du filet de sécurité,
au moins un dispositif de verrouillage (16) qui présente un état de repos et peut être commuté de l'état de repos vers un autre état, ledit dispositif de verrouillage, dans l'état de repos, empêchant une rotation de l'arbre d'enroulement (8) dans le sens du déroulement sous l'action d'un objet projeté sur le filet de sécurité (9) et permettant dans l'autre état une rotation essentiellement libre de l'arbre d'enroulement (8),
un dispositif de commande (29, 38, 47 ; 50, 51 ; 72, 84) qui est associé au dispositif de verrouillage (16) et à l'aide duquel ledit dispositif de verrouillage (16) peut être amené d'un état à l'état de repos.

2. Agencement de filet de sécurité selon la revendication 1, **caractérisé en ce que** le dispositif d'enroulement comprend un ensemble moteur à ressort, par lequel l'arbre d'enroulement (8) est précontraint dans le sens de l'enroulement du filet de sécurité (9).

3. Agencement de filet de sécurité selon la revendication 1, **caractérisé en ce que** le dispositif de verrouillage (16) est un système de blocage uni-directionnel qui, à l'état bloquant, n'empêche pas une rotation de l'arbre d'enroulement (8) dans le sens de l'enroulement du filet de sécurité (9).

4. Agencement de filet de sécurité selon la revendication 1, **caractérisé en ce que** le dispositif de commande (29, 38, 47) est agencé pour un actionnement manuel.

5. Agencement de filet de sécurité selon la revendication 1, **caractérisé en ce que** le dispositif de commande (29, 38, 47 ; 72, 84) est agencé de telle sorte qu'il puisse être activé en fonction de l'accélération du véhicule.

6. Agencement de filet de sécurité selon la revendication 1, **caractérisé en ce qu'**il comporte au moins deux dispositifs de verrouillage (16) différents.

7. Agencement de filet de sécurité selon la revendication 1, **caractérisé en ce que** le dispositif de verrouillage (16) comporte un organe de blocage (21, 67) qui est essentiellement solidaire en rotation de l'arbre d'enroulement (8) et coopère avec un organe de verrouillage (22, 62) logé à l'intérieur du boîtier (4).

8. Agencement de filet de sécurité selon la revendication 7, **caractérisé en ce que** l'organe de blocage est une roue à rochet (21) solidaire en rotation de l'arbre d'enroulement (8), pourvue d'une denture qui s'étend sur tout le pourtour.

9. Agencement de filet de sécurité selon la revendication 8, **caractérisé en ce que** la denture a un profil en dents de scie.

10. Agencement de filet de sécurité selon la revendication 7, **caractérisé en ce que** l'organe de verrouillage est formé d'un cliquet de verrouillage (22) monté pivotant à l'intérieur du boîtier (4).

11. Agencement de filet de sécurité selon la revendication 7, **caractérisé en ce que** l'organe de verrouillage est formé d'un coulisseau de verrouillage monté coulissant à l'intérieur du boîtier (4).

12. Agencement de filet de sécurité selon la revendication 7, **caractérisé en ce que** l'organe de verrouillage est formé d'au moins une dent de verrouillage (52, 63) fixée rigidement à l'intérieur du boîtier (4).

13. Agencement de filet de sécurité selon la revendication 7, **caractérisé en ce que** l'organe de verrouillage est formé d'une roue évidée (22, 62) montée fixe en rotation à l'intérieur du boîtier (4), qui porte au moins une dent de verrouillage (52) ou une pluralité de dents de verrouillage (63) équidistantes.

14. Agencement de filet de sécurité selon la revendication 1, **caractérisé en ce que** le dispositif de commande (29, 38, 47 ; 72, 84) comprend une bille (47, 84) montée dans une cuvette (45, 46).

15. Agencement de filet de sécurité selon la revendication 1, **caractérisé en ce que** le dispositif de commande (29, 38, 47) comprend un cliquet (38) monté pivotant dans le boîtier (4).
